# EUROPEAN PATENT SPECIFICATION

(11) **EP 2 651 169 B1**
(45) Date of publication and mention of the grant of the patent: **19.12.2018**
(21) Application number: 12731889.7
(22) Date of filing: 09.01.2012
(51) Int. Cl.: H04W 72/12, H04W 36/20, H04W 74/08, H04W 72/04, H04W 88/06, H04L 1/18

(54) **TERMINAL DEVICE AND METHOD THEREOF FOR REDUCING INTRA-DEVICE INTERFERENCE**
ENDGERÄT UND VERFAHREN ZUR REDUZIERUNG GERÄTEINTERNER INTERFERENZEN
DISPOSITIF DE TERMINAL ET PROCÉDÉ ASSOCIÉ POUR RÉDUIRE LES INTERFÉRENCES INTRA-DISPOSITIFS

(30) Priority: 07.01.2011 CN 201110002792
(43) Date of publication of application: 16.10.2013
(73) Proprietor: Huawei Technologies Co., Ltd., Longgang District Shenzhen, Guangdong 518129 (CN)
(72) Inventor: GAO, Wen, Shenzhen Guangdong 518129 (CN); GUO, Yi, Shenzhen Guangdong 518129 (CN)
(74) Representative: Thun, Clemens
(86) International application number: PCT/CN2012/070138
(87) International publication number: WO 2012/092882

(56) References cited:
- EP-A2- 1 168 690
- WO-A1-2012/050336
- CN-A- 1 174 636
- CN-A- 101 411 228
- CN-A- 101 742 618
- HUAWEI ET AL: "Potential mechanism to realize TDM pattern", 3GPP DRAFT; R2-106399, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jacksonville, USA; 20101115, 9 November 2010 (2010-11-09), XP050492258, [retrieved on 2010-11-09]
- CATT: "The general principles of the TDM solution", 3GPP DRAFT; R2-106389, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jacksonville, USA; 20101115, 9 November 2010 (2010-11-09), XP050492253, [retrieved on 2010-11-09]
- CMCC: "Framework and procedure of in-device coexistence interference avoidance", 3GPP DRAFT; R2-106382 FRAMEWORK AND PROCEDURE OF IN-DEVICE COEXISTENCE INTERFERENCE AVOIDANCE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jacksonville; 20101115 - 20101119, 9 November 2010 (2010-11-09), XP050605532, [retrieved on 2010-11-09]

## Description

### FIELD OF TECHNOLOGY

The present invention relates to the field of interference processing, and in particular, to a terminal device and a method for reducing interference in a device.

### BACKGROUND

In a communication system, a frequency spectrum is divided into different frequency ranges, and there are adjacent frequency ranges which are occupied by different communication modes respectively. When a terminal device adopts different communication modes of the frequency ranges which are adjacent to each other for communication, interference in the terminal device occurs.

In order to solve the problem of interference in the terminal device, a TDM (Time-division multiplexing, time-division multiplexing) scheme has been proposed currently, that is, the communication systems with adjacent frequency ranges carry out communication in time-division. The TDM scheme divides a present communication mode into a non-scheduling period and a scheduling period by using a DRX (Discontinuous Reception, discontinuous reception) mechanism of a system. Taking an LTE (Long Term Evolution, long term evolution) system as an example, the scheduling period refers to a time period when an on duration timer and an inactivity timer (inactivity timer) are running, while the non-scheduling period refers to a time period when the on duration timer and a DRX inactivity timer are not running. In the present communication mode, data is transmitted within the scheduling period, while in other communication modes, data is transmitted within the non-scheduling period of the present communication mode, and thus the problem of interference in the terminal device when the system coexists with other communication modes can be solved.

However, many systems still can carry out some data transmission operations within the non-scheduling period, for example, the LTE system can conduct operations such as data retransmission and scheduling request transmission within the non-scheduling period, which also can cause interference on the other communication modes. There are none corresponding solutions in the prior art to deal with interference in the terminal device.

HUAWEI ET AL: "Potential mechanism to realize TDM pattern", 3GPP DRAFT; R2-106399; RAN WG2, Jacksonville, USA; 20101115,9 November 2010 (2010-11-09), XP050492258, provides descriptions of scheduling period, unscheduled period and using the DRX sleeping time for "unscheduled period".

CATT: "The general principles of the TDM solution", 3GPP DRAFT; R2-106389; RAN WG2, Jacksonville, USA; 20101115,9 November 2010 (2010-11-09), XP050492253, provides the general principles of the TDM solution to ensure the LTE performance while avoiding the in-device coexistence interference.

CMCC: "Framework and procedure of in-device coexistence interference avoidance", 3GPP DRAFT; R2-106382; RAN WG2, Jacksonville; 20101115-20101119,9 November 2010 (2010-11-09), XP050605532, provides some FDM and TDM solutions to in-device coexistence interference.

WO 2012/050336 A1 discloses a method and an apparatus for avoiding in-device interference in a terminal equipped with multiple heterogeneous communication modules.

### SUMMARY

In order to solve the problem of interference in a device within a non-scheduling period, embodiments of the present invention provide a terminal device and a method for reducing interference in the terminal device, according to the subject-matter of appended independent claims 1 and 4. The technical solutions are described as follows. The embodiments and/ or examples of the following description which are not covered by the appended claims are considered as not being part of the present invention.

A first aspect ,a method for reducing interference in a device is provided, comprising:
receiving a control signaling for reducing interference in the terminal device sent by a base station; and
according to the control signaling, stopping an operation within a non-scheduling period of an LTE communication mode, where the LTE communication mode corresponds to the control signaling,
where the operation is performed within the non-scheduling period of the communication mode if the control signaling for reducing the interference is not received,
where the non-scheduling period refers to a time period when an on duration timer and a discontinuous reception, DRX, inactivity timer are not running, and
where according to the control signaling, stopping (102; 204), by the terminal device, the related operation within the non-scheduling period of the communication mode corresponding to the control signaling, includes:
   according to a stopping operation type carried by the control signaling, stopping (204d), by the terminal device, an operation corresponding to the stopping operation type within the non-scheduling period of the communication mode corresponding to the control signaling; or
   according to a scheduling request, SR, triggering condition carried by the control signaling, stopping (204e), by the terminal device, an SR triggering operation in nonconformity with the SR triggering condition within the non-scheduling period of the communication mode corresponding to the control signaling; or
   according to the control signaling, and a subsequent operation instruction carrying a stopping operation type or an SR triggering condition, when the subsequent operation instruction carries the stopping operation type, stopping (204d), by the terminal device, an operation corresponding to the stopping operation type within the non-scheduling period of the communication mode corresponding to the control signaling; when the subsequent operation instruction carries the SR triggering condition, stopping (204e), by the terminal device, an SR triggering operation in nonconformity with the SR triggering condition within the non-scheduling period of the communication mode corresponding to the control signaling.

In a first possible implementation of the method according to the first aspect, before receiving, by a terminal device, the control signaling for reducing interference in the terminal device sent by the base station, comprising:
sending, by the terminal device, an instruction signaling for interference frequency to the base station, after detecting interference in the terminal device, where the control signaling for reducing interference in the terminal device is returned by the base station after the instruction signaling for interference frequency is sent to the base station and when there is no available frequency, where the available frequency is a frequency that can avoid interference between different systems at the terminal device, where the instruction signaling for interference frequency includes the available frequency and an unavailable frequency.

In a second possible implementation of the method according to the first aspect, where stopping, by the terminal device, the uplink downlink retransmission operation within the non-scheduling period of the communication mode corresponding to the control signaling, according to the control signaling, comprises:
according to the control signaling, stopping, by the terminal device, a DRX retransmission timer of the communication mode corresponding to the control signaling, and clearing a Hybrid Automatic Repeat Request HARQ buffer area of the communication mode corresponding to the control signaling.

A second aspect, a terminal device is provided, comprising:
a receiving module, configured to receive a control signaling for reducing interference in the terminal device sent by a base station; and
a stopping module, configured to, according to the control signaling, stop an operation within a non-scheduling period of an LTE communication mode, where the LTE communication mode corresponds to the control signaling,
where the operation is carried out within the non-scheduling period of the communication mode if the control signaling for reducing the interference is not received,
where the non-scheduling period refers to a time period when an on duration timer and a discontinuous reception, DRX, inactivity timer are not running, and
where the stopping module (302) includes a fourth stopping unit (3024) or a fifth stopping unit (3025);
the fourth stopping unit (3024) configured to, according to a stopping operation type carried by the control signaling, stop an operation corresponding to the stopping operation type within the non-scheduling period of the communication mode corresponding to the control signaling; or alternatively, configured to, according to the control signaling, a subsequent operation instruction carrying a stopping operation type, stop an operation corresponding to the stopping operation type within the non-scheduling period of the communication mode corresponding to the control signaling;
the fifth stopping unit (3025) configured to, according to a scheduling request, SR, triggering condition carried by the control signaling, stop an SR triggering operation in nonconformity with the SR triggering condition within the non-scheduling period of the communication mode corresponding to the control signaling; or alternatively, configured to, according to the control signaling and a subsequent operation instruction carrying an SR triggering condition, stop an SR triggering operation in nonconformity with the SR triggering condition within the non-scheduling period of the communication mode corresponding to the control signaling.

In a first possible implementation of the terminal device according to the second aspect, further comprising:
a sending module, configured to send an instruction signaling for interference frequency to the base station after detecting interference in the terminal device, where the control signaling for reducing interference in the terminal device is returned by the base station after the instruction signaling for interference frequency is sent to the base station and when there is no available frequency, where the available frequency is a frequency that can avoid interference between different systems at the terminal device, wherein the instruction signaling for interference frequency comprises the available frequency and an unavailable frequency.

In a second possible implementation of the terminal device according to the second aspect, where the first stopping unit is configured to:
according to the control signaling, stop a DRX retransmission timer of the communication mode corresponding to the control signaling, and clear a Hybrid Automatic Repeat Request HARQ buffer area of the communication mode corresponding to the control signaling.

The technical solutions of embodiments of the present invention have the following advantages:
Other communication modes are enabled to carry out data transmission within the non-scheduling period of the communication mode corresponding to the control signaling, by way of stopping by the terminal device the related operation within the non-scheduling period of the communication mode corresponding to the control signaling according to the control signaling for interference processing sent by the base station. This reduces the interference to the other communication modes due to the communication mode corresponding to the control signaling within the non-scheduling period, and thus reduces the interference in the terminal device within the non-scheduling period.

### BRIEF DESCRIPTION OF THE DRAWINGS

To make the technical solutions of the present invention more clearly, the following briefly describes the accompanying drawings needed for describing the embodiments or the prior art. Obviously, the accompanying drawings in the following description merely show some embodiments of the present invention, and persons skilled in the art can derive other drawings from these drawings without creative efforts.
Figure 1 is a flow chart of a method for reducing interference in a device according to Embodiment 1 of the present invention;
Figure 2 is a flow chart of a method for reducing interference in a device according to Embodiment 2 of the present invention;
Figure 3 is a schematic structural diagram of a terminal device according to Embodiment 3 of the present invention;
Figure 4 is another schematic structural diagram of the terminal device according to Embodiment 3 of the present invention;
Figure 5 is a flow chart of a method for switching frequency according to Embodiment 4 of the present invention; and
Figure 6 is a schematic structural diagram of a base station according to Embodiment 5 of the present invention.

### DESCRIPTION OF EMBODIMENTS

In order to make objectives, technical solutions, and advantages of the present invention clearer, embodiments of the present invention are further described below in detail with reference to the accompanying drawings.

### Embodiment 1

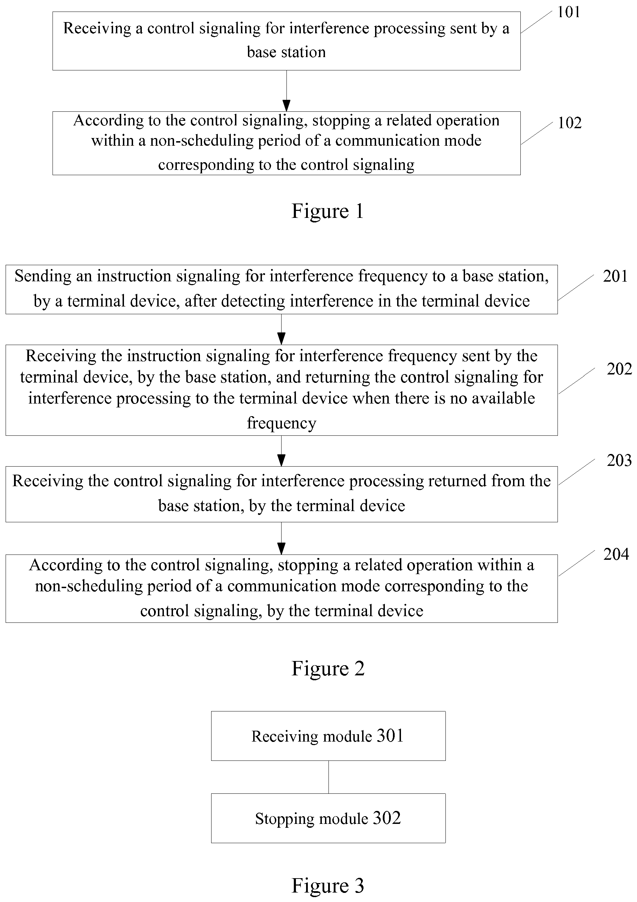

Referring to Figure 1, this embodiment provides a method for reducing interference in a device, and for a terminal device, the method includes:
101: receiving a control signaling for interference processing sent by a base station; and
102: according to the control signaling, stopping a related operation within a non-scheduling period of a communication mode corresponding to the control signaling.

Wherein, the communication mode includes but is not limited to: LTE, Blue Tooth, ZigBee (ZigBee), WiFi (Wireless Fidelity, wireless fidelity), GSM (Global System for Mobile Communications, global system for mobile communications) and etc.

This embodiment enables other communication modes to carry out data transmission within the non-scheduling period of the communication mode corresponding to the control signaling, by way of stopping by the terminal device the related operation within the non-scheduling period of the communication mode corresponding to the control signaling according to the control signaling for interference processing sent by the base station. This reduces the interference to the other communication modes due to the communication mode corresponding to the control signaling within the non-scheduling period, and thus reduces the interference in the terminal device within the non-scheduling period.

### Embodiment 2

This embodiment is modified on the basis of Embodiment 1. Referring to Figure 2, this embodiment provides a method for reducing interference in a device, including:
201: sending an instruction signaling for interference frequency to a base station, by a terminal device, after detecting interference in the terminal device;
   wherein, the terminal device includes but is not limited to a UE (User Equipment, user equipment).

Wherein, the instruction signaling for interference frequency can include an available frequency and an unavailable frequency. And the instruction signaling for interference frequency may further include a reason for unavailability of a unavailable frequency, such as a reason for the influence of LTE on the BT (Blue Tooth, blue tooth) or WiFi (Wireless Fidelity, wireless fidelity). Wherein, the reason for unavailability can be represented by numbering the scene influenced by the system, for example, the influence of LTE on the BT is numbered as 1, the influence of LTE on the WiFi is numbered as 2, and so on. In addition, the instruction signaling for interference frequency can be an RRC (Radio Resource Control, radio resource control) signaling, a MAC (Media Access Control, media access control) layer signaling, or a PHY (physical, physical layer) signaling.

202: receiving the instruction signaling for interference frequency sent by the terminal device, by the base station, and returning the control signaling for interference processing to the terminal device when there is no available frequency.

Wherein, the control signaling can in particular be a TDM indication. The control signaling can carry no parameter, and also can carry a parameter such as a stopping operation type or a logical channel priority.

Further, if there is an available frequency, the base station can indicate the terminal device to switch to a certain available frequency. Such an FDM (Frequency Division Multiplexing, frequency division multiplexing) method can avoid interference between different systems.

203: receiving the control signaling for interference processing returned from the base station, by the terminal device; and
204: according to the control signaling, stopping a related operation within a non-scheduling period of a communication mode corresponding to the control signaling, by the terminal device.

Wherein, the communication mode corresponding to the control signaling includes a non-scheduling period and a scheduling period, which can be achieved by the DRX mechanism. The communication mode corresponding to the control signaling takes an LTE system as an example, the scheduling period refers to a time period when an on duration timer and an inactivity timer (inactivity timer) are running, while the non-scheduling period refers to a time period when the on duration timer and a DRX inactivity timer are not running. The terminal device can receive a scheduling signaling of PDCCH (Physical Downlink Control Channel, physical downlink control channel) from the base station within the scheduling period and a wake-up time period of the non-scheduling period.

Particularly, this step can be carried out in the following five ways:
204a) according to the control signaling, stopping an uplink downlink retransmission operation within the non-scheduling period of the communication mode corresponding to the control signaling;
   In particular, according to the control signaling, stopping a DRX retransmission timer of the communication mode corresponding to the control signaling, and clearing an HARQ (Hybrid Automatic Repeat Request, hybrid automatic repeat request) buffer area of the communication mode corresponding to the control signaling, and thus stopping the uplink downlink retransmission operation within the non-scheduling period of the communication mode corresponding to the control signaling.

This step is applied for a case where the control signaling doesn't carry any parameter, and the terminal device carries out the stopping operation by default.

204b) according to the control signaling, stopping an SR (Scheduling Request, scheduling request) triggering operation within the non-scheduling period of the communication mode corresponding to the control signaling;
This step is applied for a case where the control signaling doesn't carry any parameter, and the terminal device carries out the stopping operation by default.

204c): according to the control signaling, stopping an SPS (Semi Persistent Scheduling, semi persistent scheduling) data transmission operation within the non-scheduling period of the communication mode corresponding to the control signaling;
This step is applied for a case where the control signaling doesn't carry any parameter, and the terminal device carries out the stopping operations by default.

204d) according to the stopping operation type carried by the control signaling, stopping an operation corresponding to the stopping operation type within the non-scheduling period of the communication mode corresponding to the control signaling; alternatively, according to the control signaling, a subsequent operation instruction carrying a stopping operation type, stopping an operation corresponding to the stopping operation type within the non-scheduling period of the communication mode corresponding to the control signaling;
Wherein, the stopping operation type includes but is not limited to: the uplink downlink retransmission operation, the SR triggering operation, or the SPS data transmission operation.

204e) according to an SR triggering condition carried by the control signaling, stopping an SR triggering operation in nonconformity with the SR triggering condition within the non-scheduling period of the communication mode corresponding to the control signaling; alternatively, according to the control signaling, a subsequent operation instruction carrying an SR triggering condition, stopping an SR triggering operation in nonconformity with the SR triggering condition within the non-scheduling period of the communication mode corresponding to the control signaling.

Wherein, the SR triggering condition may be a logical channel priority, a specific service or service type, or radio bearer and etc., and this embodiment is not limited thereto. Particularly, when the SR triggering condition is the logical channel priority, an SR triggering operation of the data with a priority less than the logical channel priority is stopped, and an SR triggering operation of the data with a priority equal to or higher than the logical channel priority is carried out; when the SR triggering condition is the specific service or service type or radio bearer, an SR triggering operation of the specific service or service type or radio bearer is carried out, SR triggering operations of other services or other service types or other radio bearers are stopped; alternatively, the SR triggering operation of the specific service or service type or radio bearer is stopped, and the SR triggering operations of the other services or other service types or other radio bearers are carried out.

This step can prevent a scheduling request from being triggered by some less important data. Further, the data in conformity with the SR triggering condition can trigger the SR.

This embodiment enables other communication modes to carry out data transmission within the non-scheduling period of the communication mode corresponding to the control signaling, by way of stopping by the terminal device a related operation, such as the uplink downlink retransmission operation, the SR triggering operation, the SPS data transmission operation, or the SR triggering operation in nonconformity with the SR triggering condition within the non-scheduling period of the communication mode corresponding to the control signaling according to the control signaling for interference processing sent by the base station. This reduces the interference to the other communication modes due to the communication mode corresponding to the control signaling within the non-scheduling period, and thus reduces interference in the terminal device within the non-scheduling period.

### Embodiment 3

Referring to Figure 3, this embodiment provides a terminal device, which belongs to the same concept with the terminal devices in Embodiments 1 and 2, including:
a receiving module 301, configured to receive a control signaling for interference processing sent by a base station; and
wherein, the control signaling can in particular be a TDM indication. The control signaling can carry no parameter, and also further may carry a parameter such as a stopping operation type or a logical channel priority.
a stopping module 302, configured to, according to the control signaling, stop a related operation within a non-scheduling period of a communication mode corresponding to the control signaling.

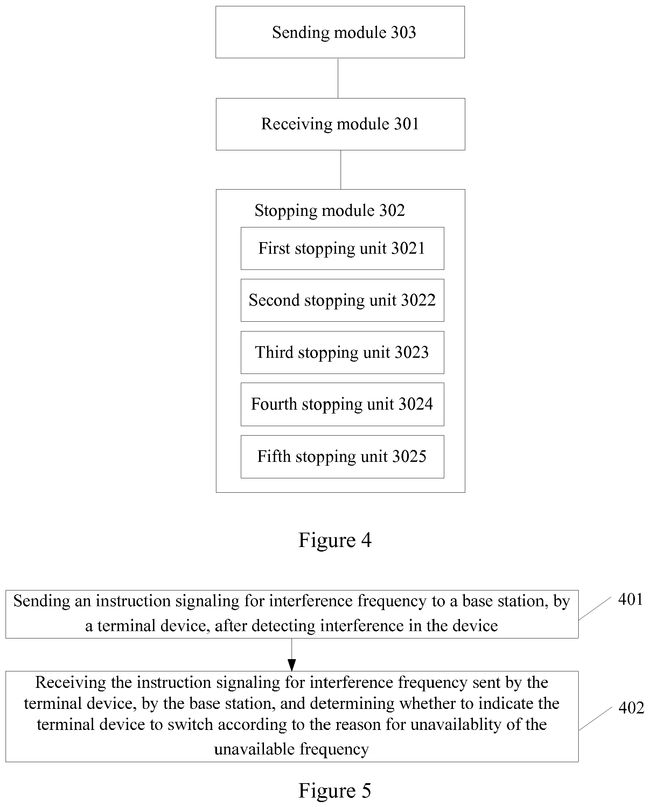

Further, referring to Figure 4, the terminal device also includes:
a sending module 303, configured to send an instruction signaling for interference frequency to a base station after detecting interference in the terminal device such that the base station returns the control signaling for interference processing when there is no available frequency.

Wherein, the stopping module 302 includes: a first stopping unit 3021, a second stopping unit 3022, a third stopping unit 3023, a fourth stopping unit 3024, or a fifth stopping unit 3025;
the first stopping unit 3021, configured to, according to the control signaling, stop an uplink downlink retransmission operation within the non-scheduling period of the communication mode corresponding to the control signaling;
the second stopping unit 3022, configured to, according to the control signaling, stop an SR triggering operation within the non-scheduling period of the communication mode corresponding to the control signaling;
the third stopping unit 3023, configured to, according to the control signaling, stop an SPS data transmission operation within the non-scheduling period of the communication mode corresponding to the control signaling;
the fourth stopping unit 3024, configured to, according to the stopping operation type carried by the control signaling, stop an operation corresponding to the stopping operation type within the non-scheduling period of the communication mode corresponding to the control signaling;
alternatively, the fourth stopping unit 3024, configured to, according to the control signaling and a subsequent operation instruction carrying a stopping operation type, stop an operation corresponding to the stopping operation type within the non-scheduling period of the communication mode corresponding to the control signaling;
the fifth stopping unit 3025, configured to, according to a scheduling request SR triggering condition carried by the control signaling, stop an SR triggering operation in nonconformity with the SR triggering condition within the non-scheduling period of the communication mode corresponding to the control signaling;
alternatively, the fifth stopping unit 3025, configured to, according to the control signaling, a subsequent operation instruction carrying an SR triggering condition , stop an SR triggering operation in nonconformity with the SR triggering condition within the non-scheduling period of the communication mode corresponding to the control signaling.

Wherein, the SR triggering condition may be a logical channel priority, or a specific service or service type, or radio bearer and etc., and this embodiment is not limited thereto. Particularly, when the SR triggering condition is the logical channel priority, an SR triggering operation of the data with a priority less than the logical channel priority is stopped, and an SR triggering operation of the data with a priority equal to or higher than the logical channel priority is carried out; when the SR triggering condition is the specific service or service type or radio bearer, an SR triggering operation of the specific service or service type or radio bearer is carried out, SR triggering operations of other services or other service types or other radio bearers are stopped; alternatively, the SR triggering operation of the specific service or service type or radio bearer is stopped, and the SR triggering operations of the other services or other service types or other radio bearers are carried out.

Wherein, the first stopping unit 3021 is specifically configured to:
according to the control signaling, stop a DRX retransmission timer of the communication mode corresponding to the control signaling, and clear a Hybrid Automatic Repeat Request HARQ buffer area of the communication mode corresponding to the control signaling.

Wherein, the stopping operation type of the fourth stopping unit 3024 includes: the uplink downlink retransmission operation, the SR triggering operation, or the SPS data transmission operation.

The terminal device provided by this embodiment belong to the same concept with the terminal devices in Embodiments 1 and 2, and the specific implementation processes thereof are described in detail in the method embodiments, and are not discussed further herein.

This embodiment enables other communication modes to carry out data transmission within the non-scheduling period of the communication mode corresponding to the control signaling, by way of stopping by the terminal device a related operation, such as an uplink downlink retransmission operation, the SR triggering operation, the SPS data transmission operation, or the SR triggering operation in nonconformity with the SR triggering condition within the non-scheduling period of the communication mode corresponding to the control signaling according to the control signaling for interference processing sent by the base station. This reduces the interference to the other communication modes due to the communication mode corresponding to the control signaling within the non-scheduling period, and thus reduces interference in the terminal device within the non-scheduling period.

### Embodiment 4

Referring to Figure 5, this embodiment provides a method for switching frequency, including:
401: sending an instruction signaling for interference frequency to a base station, by a terminal device, after detecting interference in the terminal device;
Wherein, the instruction signaling for interference frequency can at least include an unavailable frequency, and a reason for unavailability of the unavailable frequency, and the instruction signaling may also further include an available frequency. Wherein, the reason for unavailability of the unavailable frequency may in particular be the influence of one system on the other system, such as the influence of LTE on the BT or WiFi. The reason for unavailability can be represented by numbering the scene influenced by the system, for example, the influence of LTE on the BT is numbered as 1, and the influence of LTE on the WiFi is numbered as 2, and so on. In addition, the instruction signaling for interference frequency can be an RRC signaling or a MAC layer signaling.

Wherein, the terminal device may be a UE, but this embodiment is not limited thereto.

402: receiving the instruction signaling for interference frequency sent by the terminal device, by the base station, and determining whether to indicate the terminal device to switch according to the unavailable reason of the unavailable frequency;
Particularly, if the unavailable reason of the unavailable frequency is the influence of the LTE system on other communication mode, then the base station does not indicate the terminal device to switch; if the unavailable reason of the unavailable frequency is the influence of other communication mode on the LTE system and there are available frequencies, the base station can indicate the terminal device to switch to a certain available frequency.

In this embodiment, the base station determines whether to indicate the terminal device to switch according to a reason for unavailability of the unavailable frequency sent by the terminal device, and if the reason for unavailability is the influence of the LTE system on other communication mode, the base station doesn't care about the operating condition of the other communication mode, and if the other communication mode has taken measures to avoid interference and etc, the base station can avoid performing unnecessary switching operations, and thus it saves the processing resources of the base station.

### Embodiment 5

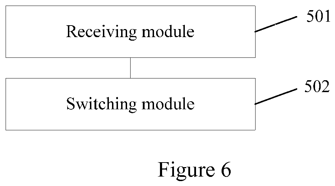

Referring to Figure 6, this embodiment provides a base station, including:
a receiving module 501, configured to receive an instruction signaling for interference frequency sent by a terminal device after the terminal device detects interference in the terminal device;
   Wherein, the instruction signaling for interference frequency can at least include an unavailable frequency, and a reason for unavailability of the unavailable frequency, and the instruction signaling may also further include an available frequency. Wherein, the reason for unavailability of the unavailable frequency may in particular be the influence of one system on the other system, such as the influence of LTE on the BT or WiFi. The reason for unavailability can be represented by numbering the scene influenced by the system, for example, the influence of LTE on the BT is numbered as 1, and the influence of LTE on the WiFi is numbered as 2, and so on. In addition, the instruction signaling for interference frequency can be an RRC signaling or a MAC layer signaling.
a switching module 502, configured to determine whether to indicate the terminal device to switch according to the reason for unavailability of the unavailable frequency carried by the instruction signaling for interference frequency;
   The switching module is particularly configured, if the reason for unavailability of the unavailable frequency is the influence of the LTE system on other communication mode, not to indicate the terminal device to switch; if the reason for unavailability of the unavailable frequency is the influence of other communication mode on the LTE system and there are available frequencies, to indicate the terminal device to switch to a certain available frequency.

The base station provided by this embodiment belongs to the same concept with the base station in Embodiment 4, and the specific implementation processes thereof are described in detail in the method embodiment, and are not discussed further herein.

In this embodiment, the base station determines whether to indicate the terminal device to switch according to the reason for unavailability of the unavailable frequency sent by the terminal device, and if the reason is the influence of the LTE system on other communication mode, the base station doesn't care about the operating condition of the other communication mode, and if the other communication mode has taken measures to avoid interference and etc, the base station can avoid performing unnecessary switching operations, and thus it saves the processing resources of the base station.

All or part of the technical solutions provided by embodiments described above can be implemented by software programming, and the software program may be stored on a readable storage media such as a hard disk, an optical disk or a floppy disk in a computer.

The above descriptions are merely preferred embodiments of the present invention and they do not intend to limit the present invention, which is defined by the claims. Any modification, equal replacement and development within the principle of the present invention shall fall within the protection scope of the present invention, as defined by the claims.

## Claims

1. A method for reducing interference in a device, comprising:
receiving (101; 203), by a terminal device, a control signaling for reducing interference in the terminal device sent by a base station; and
according to the control signaling, stopping (102; 204), by the terminal device, an operation within a non-scheduling period of an LTE communication mode, wherein the LTE communication mode corresponds to the control signaling,
wherein the operation is performed within the non-scheduling period of the communication mode if the control signaling for reducing the interference is not received,
wherein the non-scheduling period refers to a time period when an on duration timer and a discontinuous reception, DRX, inactivity timer are not running, and
wherein according to the control signaling, stopping (102; 204), by the terminal device, the related operation within the non-scheduling period of the communication mode corresponding to the control signaling, comprises:
according to a stopping operation type carried by the control signaling, stopping (204d), by the terminal device, an operation corresponding to the stopping operation type within the non-scheduling period of the communication mode corresponding to the control signaling; or
according to a scheduling request, SR, triggering condition carried by the control signaling, stopping (204e), by the terminal device, an SR triggering operation in nonconformity with the SR triggering condition within the non-scheduling period of the communication mode corresponding to the control signaling; or
according to the control signaling, and a subsequent operation instruction carrying a stopping operation type or an SR triggering condition, when the subsequent operation instruction carries the stopping operation type, stopping (204d), by the terminal device, an operation corresponding to the stopping operation type within the non-scheduling period of the communication mode corresponding to the control signaling; when the subsequent operation instruction carries the SR triggering condition, stopping (204e), by the terminal device, an SR triggering operation in nonconformity with the SR triggering condition within the non-scheduling period of the communication mode corresponding to the control signaling.

2. The method according to claim 1, before receiving (101; 203), by a terminal device, the control signaling for reducing interference in the terminal device sent by the base station, comprising:
sending (201), by the terminal device, an instruction signaling for interference frequency to the base station, after detecting interference in the terminal device, wherein the control signaling for reducing interference in the terminal device is returned by the base station after the instruction signaling for interference frequency is sent to the base station and when there is no available frequency, wherein the available frequency is a frequency that can avoid interference between different systems at the terminal device, wherein the instruction signaling for interference frequency comprises the available frequency and an unavailable frequency.

3. The method according to claim 1, wherein stopping (204a), by the terminal device, the uplink downlink retransmission operation within the non-scheduling period of the communication mode corresponding to the control signaling, according to the control signaling, comprises:
according to the control signaling, stopping (204a), by the terminal device, a DRX retransmission timer of the communication mode corresponding to the control signaling, and clearing a Hybrid Automatic Repeat Request HARQ buffer area of the communication mode corresponding to the control signaling.

4. A terminal device, comprising:
a receiving module (301), configured to receive a control signaling for reducing interference in the terminal device sent by a base station; and
a stopping module (302), configured to, according to the control signaling, stop an operation within a non-scheduling period of an LTE communication mode, wherein the LTE communication mode corresponds to the control signaling,
wherein the operation is performed within the non-scheduling period of the communication mode if the control signaling for reducing the interference is not received,
wherein the non-scheduling period refers to a time period when an on duration timer and a discontinuous reception, DRX, inactivity timer are not running, and
wherein the stopping module (302) comprises a fourth stopping unit (3024) or a fifth stopping unit (3025);
the fourth stopping unit (3024) configured to, according to a stopping operation type carried by the control signaling, stop an operation corresponding to the stopping operation type within the non-scheduling period of the communication mode corresponding to the control signaling; or alternatively, configured to, according to the control signaling, a subsequent operation instruction carrying a stopping operation type, stop an operation corresponding to the stopping operation type within the non-scheduling period of the communication mode corresponding to the control signaling;
the fifth stopping unit (3025) configured to, according to a scheduling request, SR, triggering condition carried by the control signaling, stop an SR triggering operation in nonconformity with the SR triggering condition within the non-scheduling period of the communication mode corresponding to the control signaling; or alternatively, configured to, according to the control signaling and a subsequent operation instruction carrying an SR triggering condition, stop an SR triggering operation in nonconformity with the SR triggering condition within the non-scheduling period of the communication mode corresponding to the control signaling.

5. The terminal device according to claim 4, further comprising:
a sending module (303), configured to send an instruction signaling for interference frequency to the base station after detecting interference in the terminal device, wherein the control signaling for reducing interference in the terminal device is returned by the base station after the instruction signaling for interference frequency is sent to the base station and when there is no available frequency, wherein the available frequency is a frequency that can avoid interference between different systems at the terminal device, wherein the instruction signaling for interference frequency comprises the available frequency and an unavailable frequency.

6. The terminal device according to claim 4, wherein the first stopping unit (3021) is configured to:
according to the control signaling, stop a DRX retransmission timer of the communication mode corresponding to the control signaling, and clear a Hybrid Automatic Repeat Request HARQ buffer area of the communication mode corresponding to the control signaling.

## Patentansprüche

1. Verfahren zum Verringern einer Störung in einer Einrichtung, das Folgendes umfasst:
Empfangen (101; 203) durch ein Endgerät einer Steuersignalisierung zum Verringern einer Störung in dem Endgerät, die durch eine Basisstation gesendet wurde; und
Anhalten (102; 204) durch das Endgerät eines Vorgangs in einem Nichtplanungszeitraum eines LTE-Kommunikationsmodus gemäß der Steuersignalisierung, wobei der LTE-Kommunikationsmodus der Steuersignalisierung entspricht, wobei
der Vorgang in dem Nichtplanungszeitraum des Kommunikationsmodus durchgeführt wird, wenn das Steuersignal zum Verringern der Störung nicht empfangen wird,
der Nichtplanungszeitraum sich auf einen Zeitraum bezieht, in dem ein Einschaltdauerzeitgeber und ein Inaktivitätszeitgeber für diskontinuierlichen Empfang, DRX-Inaktivitätszeitgeber, nicht ausgeführt werden, und
das Anhalten (102; 204) des verbundenen Vorgangs in dem Nichtplanungszeitraum des Kommunikationsmodus, der der Steuersignalisierung entspricht, durch das Endgerät gemäß der Steuersignalisierung Folgendes umfasst:
Anhalten (204d) durch das Endgerät gemäß einem Anhaltvorgangstyp, der durch die Steuersignalisierung ausgeführt wird, eines Vorgangs, der dem Anhaltvorgangstyp in dem Nichtplanungszeitraum des Kommunikationsmodus, der der Steuersignalisierung entspricht, entspricht; oder
Anhalten (204e) durch das Endgerät gemäß einem Planungsanforderungsauslösezustand, SR-Auslösezustand, der durch die Steuersignalisierung geführt wird, eines SR-Auslösevorgangs ohne Übereinstimmung mit dem SR-Auslösezustand in dem Nichtplanungszeitraum des Kommunikationsmodus, der der Steuersignalisierung entspricht; oder
in Übereinstimmung mit der Steuersignalisierung und einer nachfolgenden Vorgangsanweisung, die einen Anhaltvorgangstyp oder einen SR-Auslösezustand führt, dann, wenn die nachfolgende Vorgangsanweisung den Anhaltvorgangstyp führt, Anhalten (204d) durch das Endgerät eines Vorgangs, der dem Anhaltvorgangstyp in dem Nichtplanungszeitraum des Kommunikationsmodus entspricht, der seinerseits der Steuersignalisierung entspricht; und dann, wenn die nachfolgende Vorgangsanweisung den SR-Auslösezustand führt, Anhalten (204e) durch das Endgerät eines SR-Auslösevorgangs ohne Übereinstimmung mit dem SR-Auslösezustand in dem Nichtplanungszeitraum des Kommunikationsmodus, der der Steuersignalisierung entspricht.

2. Verfahren nach Anspruch 1, wobei die Steuersignalisierung zum Verringern einer Störung in dem Endgerät, die durch eine Basisstation gesendet wurde, vor dem Empfangen (101; 203) durch ein Endgerät Folgendes umfasst:
Senden (201) durch das Endgerät einer Anweisungssignalisierung für eine Störungsfrequenz zu der Basisstation nach dem Detektieren einer Störung in dem Endgerät, wobei die Steuersignalisierung zum Verringern einer Störung in dem Endgerät durch die Basisstation zurückgegeben wird, nachdem die Anweisungssignalisierung für eine Störungsfrequenz zu der Basisstation gesendet wurde und wenn keine verfügbare Frequenz vorliegt, wobei die verfügbare Frequenz eine Frequenz ist, die eine Störung zwischen verschiedenen Systemen bei dem Endgerät vermeiden kann und die Anweisungssignalisierung für eine Störungsfrequenz die verfügbare Frequenz und eine nicht verfügbare Frequenz umfasst.

3. Verfahren nach Anspruch 1, wobei das Anhalten (204a) des Aufwärtsstrecken-Weiterübertragungsvorgangs durch das Endgerät in dem Nichtplanungszeitraum des Kommunikationsmodus, der der Steuersignalisierung entspricht, gemäß der Steuersignalisierung Folgendes umfasst:
Anhalten (204a) eines DRX-Weiterübertagungszeitgebers des Kommunikationsmodus, der der Steuersignalisierung entspricht, durch das Endgerät gemäß der Steuersignalisierung und Freigeben eines Pufferbereichs für eine hybride automatische Wiederholungsanforderung HARQ-Pufferbereich des Kommunikationsmodus, der der Steuersignalisierung entspricht.

4. Endgerät, das Folgendes umfasst:
ein Empfangsmodul (301), das konfiguriert ist, eine Steuersignalisierung zum Verringern einer Störung in dem Endgerät, die durch eine Basisstation gesendet wurde, zu empfangen; und
ein Anhaltmodul (302), das konfiguriert ist, einen Vorgang in einem Nichtplanungszeitraum eines LTE-Kommunikationsmodus gemäß der Steuersignalisierung anzuhalten, wobei der LTE-Kommunikationsmodus der Steuersignalisierung entspricht, wobei
der Vorgang in dem Nichtplanungszeitraum des Kommunikationsmodus durchgeführt wird, wenn das Steuersignal zum Verringern der Störung nicht empfangen wird,
der Nichtplanungszeitraum sich auf einen Zeitraum bezieht, in dem ein Einschaltdauerzeitgeber und ein Inaktivitätszeitgeber für diskontinuierlichen Empfang, DRX-Inaktivitätszeitgeber, nicht ausgeführt werden, und
das Anhaltmodul (302) eine vierte Anhalteinheit (3024) oder eine fünfte Anhalteinheit (3025) umfasst; wobei
die vierte Anhalteinheit (3024) konfiguriert ist, gemäß einem Anhaltvorgangstyp, der durch die Steuersignalisierung ausgeführt wird, einen Vorgang anzuhalten, der dem Anhaltvorgangstyp in dem Nichtplanungszeitraum des Kommunikationsmodus, der der Steuersignalisierung entspricht, entspricht; oder alternativ konfiguriert ist, gemäß der Steuersignalisierung, einer nachfolgenden Vorgangsanweisung, die einen Anhaltvorgangstyp führt, einen Vorgang anzuhalten, der dem Anhaltvorgangstyp in dem Nichtplanungszeitraum des Kommunikationsmodus, der der Steuersignalisierung entspricht, entspricht;
die fünfte Anhalteinheit (3025) konfiguriert ist, gemäß einem Planungsanforderungsauslösezustand, SR-Auslösezustand, der durch die Steuersignalisierung geführt wird, einen SR-Auslösevorgangs ohne Übereinstimmung mit dem SR-Auslösezustand in dem Nichtplanungszeitraum des Kommunikationsmodus, der der Steuersignalisierung entspricht, anzuhalten; oder alternativ konfiguriert ist, gemäß der Steuersignalisierung und einer nachfolgenden Vorgangsanweisung, die einen SR-Auslösezustand führt, einen SR-Auslösevorgang ohne Übereinstimmung mit dem SR-Auslösezustand in dem Nichtplanungszeitraum des Kommunikationsmodus, der der Steuersignalisierung entspricht, anzuhalten.

5. Endgerät nach Anspruch 4, das ferner Folgendes umfasst:
ein Sendemodul (303), das konfiguriert ist, nach dem Detektieren einer Störung in dem Endgerät eine Anweisungssignalisierung für eine Störungsfrequenz zu der Basisstation zu senden, wobei die Steuersignalisierung zum Verringern einer Störung in dem Endgerät durch die Basisstation zurückgegeben wird, nachdem die Anweisungssignalisierung für eine Störungsfrequenz zu der Basisstation gesendet wurde und wenn keine verfügbare Frequenz vorliegt, wobei die verfügbare Frequenz eine Frequenz ist, die eine Störung zwischen verschiedenen Systemen bei dem Endgerät vermeiden kann und die Anweisungssignalisierung für eine Störungsfrequenz die verfügbare Frequenz und eine nicht verfügbare Frequenz umfasst.

6. Endgerät nach Anspruch 4, wobei die erste Anhalteinheit (3021) konfiguriert ist, gemäß der Steuersignalisierung einen DRX-Weiterübertagungszeitgeber des Kommunikationsmodus, der der Steuersignalisierung entspricht, anzuhalten und einen Pufferbereich für eine hybride automatische Wiederholungsanforderung HARQ-Pufferbereich des Kommunikationsmodus, der der Steuersignalisierung entspricht, freizugeben.

## Revendications

1. Procédé permettant de réduire une interférence dans un dispositif, consistant à :
recevoir (101 ; 203), par un dispositif terminal, une signalisation de commande permettant de réduire une interférence dans le dispositif terminal envoyée par une station de base ; et
selon la signalisation de commande, arrêter (102 ; 204), par le dispositif terminal, une opération dans une période de non-programmation d'un mode de communication LTE, le mode de communication LTE correspondant à la signalisation de commande,
dans lequel l'opération est réalisée dans la période de non-programmation du mode de communication si la signalisation de commande permettant de réduire l'interférence n'est pas reçue,
dans lequel la période de non-programmation se réfère à une période temporelle lorsqu'un chronomètre de durée d'activité et un chronomètre d'inactivité de réception discontinue, DRX, ne fonctionnent pas, et
dans lequel selon la signalisation de commande, l'arrêt (102 ; 204), par le dispositif terminal, de l'opération associée pendant la période de non-programmation du mode de communication correspondant à la signalisation de commande, consiste à :
selon un type d'opération d'arrêt porté par la signalisation de commande, arrêter (204d), par le dispositif terminal, une opération correspondant au type d'opération d'arrêt dans la période de non-programmation du mode de communication correspondant à la signalisation de commande ; ou
selon une condition de déclenchement de requête de programmation, SR, portée par la signalisation de commande, arrêter (204e), par le dispositif terminal, une opération de déclenchement de SR en non-conformité avec la condition de déclenchement de SR dans la période de non-programmation du mode de communication correspondant à la signalisation de commande ; ou
selon la signalisation de commande, et une instruction d'opération subséquente portant un type d'opération d'arrêt ou une condition de déclenchement de SR, lorsque l'instruction d'opération subséquente porte le type d'opération d'arrêt, arrêter (204d), par le dispositif terminal, une opération correspondant au type d'opération d'arrêt dans la période de non-programmation du mode de communication correspondant à la signalisation de commande; lorsque l'instruction d'opération subséquente porte la condition d'arrêt de SR, arrêter (204e), par le dispositif terminal, une opération de déclenchement de SR en non-conformité avec la condition de déclenchement de SR dans la période de non-programmation du mode de communication correspondant à la signalisation de commande.

2. Procédé selon la revendication 1, avant la réception (101 ; 203), par un dispositif terminal, de la signalisation de commande permettant de réduire une interférence dans le dispositif terminal envoyé par la station de base, consistant à :
envoyer (201), par le dispositif terminal, une signalisation d'instruction pour une fréquence d'interférence à la station de base, après la détection d'une interférence dans le dispositif terminal, la signalisation de commande permettant de réduire l'interférence dans le dispositif terminal étant renvoyée à la station de base après que la signalisation d'instruction pour une fréquence d'interférence a été envoyée à la station de base et lorsqu'il n'y a pas de fréquence disponible, la fréquence disponible étant une fréquence qui peut éviter une interférence entre différents systèmes au niveau du dispositif terminal, la signalisation d'instruction pour une fréquence d'interférence comprenant la fréquence disponible et une fréquence indisponible.

3. Procédé selon la revendication 1, dans lequel l'arrêt (204a), par le dispositif terminal, de l'opération de retransmission de liaison montante/descendante dans la période de non-programmation du mode de communication correspondant à la signalisation de commande, selon la signalisation de commande, consiste à :
selon la signalisation de commande, arrêter (204a), par le dispositif terminal, un chronomètre de retransmission DRX du mode de communication correspondant à la signalisation de commande, et effacer une zone tampon de requête automatique de répétition hybride, HARQ, du mode de communication correspondant à la signalisation de commande.

4. Dispositif terminal, comprenant :
un module de réception(301), conçu pour recevoir une signalisation de commande permettant de réduire une interférence dans le dispositif terminal envoyée par une station de base ; et
un module d'arrêt (302), conçu pour, selon la signalisation de commande, arrêter une opération dans une période de non-programmation d'un mode de communication LTE, le mode de communication LTE correspondant à la signalisation de commande,
dans lequel l'opération est réalisée dans la période de non-programmation du mode de communication si la signalisation de commande permettant de réduire l'interférence n'est pas reçue,
dans lequel la période de non-programmation se réfère à une période temporelle lorsqu'un chronomètre de durée d'activité et un chronomètre d'inactivité de réception discontinue, DRX, ne fonctionnent pas, et
dans lequel le module d'arrêt (302) comprend une quatrième unité d'arrêt (3024) ou une cinquième unité d'arrêt (3025) ;
la quatrième unité d'arrêt (3024) étant conçue pour, en fonction d'un type d'opération d'arrêt porté par la signalisation de commande, arrêter une opération correspondant au type d'opération d'arrêt dans la période de non-programmation du mode de communication correspondant à la signalisation de commande ; ou en variante, conçue pour, en fonction de la signalisation de commande, une instruction d'opération subséquente portant un type d'opération d'arrêt, arrêter une opération correspondant au type d'opération d'arrêt dans la période de non-programmation du mode de communication correspondant à la signalisation de commande ;
la cinquième unité d'arrêt (3025) étant conçue pour, en fonction d'une condition de déclenchement de requête de programmation, SR, portée par la signalisation de commande, arrêter une opération de déclenchement de SR en non-conformité avec la condition de déclenchement de SR dans la période de non-programmation du mode de communication correspondant à la signalisation de commande ; ou en variante, conçue pour, en fonction de la signalisation de commande et d'une instruction d'opération subséquente portant une condition de déclenchement de SR, arrêter une opération de déclenchement de SR en non-conformité avec la condition de déclenchement de SR dans la période de non-programmation du mode de communication correspondant à la signalisation de commande.

5. Dispositif terminal selon la revendication 4, comprenant en outre :
un module d'envoi (303), conçu pour envoyer une signalisation d'instruction pour une fréquence d'interférence à la station de base après la détection d'une interférence dans le dispositif terminal, dans lequel la signalisation de commande permettant de réduire l'interférence dans le dispositif terminal est renvoyée à la station de base après que la signalisation d'instruction pour une fréquence d'interférence a été envoyée à la station de base et lorsqu'il n'y a pas de fréquence disponible, dans lequel la fréquence disponible est une fréquence qui peut éviter une interférence entre différents systèmes au niveau du dispositif terminal, la signalisation d'instruction pour une fréquence d'interférence comprenant la fréquence disponible et une fréquence indisponible.

6. Dispositif terminal selon la revendication 4, dans lequel la première unité d'arrêt (3021) est conçue pour :
selon la signalisation de commande, arrêter un chronomètre de retransmission DRX du mode de communication correspondant à la signalisation de commande, et effacer une zone tampon de requête automatique de répétition hybride, HARQ, du mode de communication correspondant à la signalisation de commande.
